# EUROPÄISCHE PATENTSCHRIFT

(11) **EP 1 018 038 B1**
(45) Veröffentlichungstag und Bekanntmachung des Hinweises auf die Patenterteilung: **18.09.2002**
(21) Anmeldenummer: 99938323.5
(22) Anmeldetag: 22.07.1999
(51) Int. Cl.: G02B 1/04, G02C 7/02

(54) **PHOTOCHROMER KUNSTSTOFFGEGENSTAND**
PHOTOCHROMIC PLASTIC OBJECT
OBJET EN PLASTIQUE PHOTOCHROMIQUE

(30) Priorität: 23.07.1998 DE 19833013
(43) Veröffentlichungstag der Anmeldung: 12.07.2000
(73) Patentinhaber: Optische Werke G. Rodenstock, 80469 München (DE)
(72) Erfinder: MANN, Claudia, D-80634 München (DE); MELZIG, Manfred, D-82234 Wessling (DE); WEIGAND, Udo, D-80638 München (DE)
(74) Vertreter: Müller-Boré & Partner Patentanwälte
(86) Internationale Anmeldenummer: EP9905258
(87) Internationale Veröffentlichungsnummer: WO00005602

(56) Entgegenhaltungen:
- US-A- 4 818 096
- US-A- 5 429 774
- US-A- 5 753 146
- US-A- 5 770 115

## Beschreibung

Die Erfindung betrifft photochrome Kunststoffgegenstände, die eine spezifische Kombination von mindestens zwei jeweils mit einer Stickstoff enthaltenden Gruppe, insbesondere mit einer Aminogruppe bzw. einem Stickstoffheterozyklus substituierten Pyran-Derivaten enthalten und die sich insbesondere durch eine große Lebensdauer, eine gute Aufhellungsgeschwindigkeit, durch fehlendes Auftreten von Vergilbung sowie einen neutralen Farbeindruck auszeichnen, wobei auf den Einsatz von Stabilisatoren und dergleichen in den erfindungsgemäßen Kunststoffgegenständen ganz oder weitgehend verzichtet werden kann, sowie deren Verwendung.

Es sind verschiedene Farbstoffklassen bekannt, die bei Bestrahlung mit Licht bestimmter Wellenlänge, insbesondere Sonnenstrahlen, reversibel ihre Farbe wechseln. Dies rührt daher, daß diese Farbstoffmoleküle durch Energiezufuhr in Form von Licht in einen angeregten farbigen Zustand übergehen, den sie bei Unterbrechung der Energiezufuhr wieder verlassen, wodurch sie in ihren farblosen oder zumindest kaum gefärbten Normalzustand zurückkehren. Diese photochromen Farbstoffe finden in jüngster Zeit zunehmend in Kunststoffprodukten vielseitige Verwendung.

Photochrome Kunststoffprodukte, insbesondere Brillengläser, sind seit Beginn der 60er Jahre im Handel erhältlich. Die ersten Gläser, die zunehmende Verbreitung fanden, waren beispielsweise Rodenstock Perfalit Colormatic® (Marke der Optischen Werke G. Rodenstock) oder Transitions® (Marke der Transitions Optical Inc.), die jeweils nur Spirooxazine als photochrome Farbstoffe enthielten. Anfang der 90er Jahre gelangten Produkte auf den Markt, wie Transitions® Plus (seit 1992), Transitions Eurobraun® (seit 1994) und Hoya Sunbrown® (seit 1994) der Fa. Hoya Lens Corporation oder Rodenstock Perfalit Colormatic® neu (seit 1995), die bereits Pyrane neben Spirooxazinen und/oder Fulgiden enthielten. Neuere Produkte, wie Transitions® III, verwenden bevorzugt Pyrane, speziell Naphthopyrane und von diesen abgeleitete größere Ringsysteme.

In US 4,818,096 werden Zusammensetzungen beschrieben, die mindestens zwei photochrome Verbindungen enthalten, wobei die eine der mindestens zwei photochromen Verbindungen ein in der 2-Spiroposition mit einem Adamantylrest substituiertes Spirobenzo- bzw. Spironaphthopyran ist und die andere ein mit einer Stickstoff-enthaltenden Gruppe in der 2-Position des Pyranringes substituiertes Benzo- oder Naphthopyran ist. Diese Zusammensetzungen zeigen jedoch zum einen unzufriedenstellende Aufhellungsgeschwindigkeiten und zum anderen in Folge dessen, daß die Verbindungen in einem gewissen Anteil (ca. 10 bis 20 %) in der offenen Form vorliegen, eine für Anwendungszwecke störende Eigenfarbe.

In US 5,753,146 werden Zusammensetzungen beschrieben, die mindestens zwei photochrome Naphthopyran-Verbindungen, insbesondere 3[H]-Naphtho[2,1-b]-und 2[H]-Naphtho[1,2-b]pyrane, enthalten, wobei diese Naphthopyranverbindungen aber keine aminosubstituierten Arylgruppen aufweisen, die an das zum Sauerstoffatom des Pyranrings benachbarte Kohlenstoffatom gebunden sind. Mit Mischungen, wie sie in US 5,753,146 beschrieben sind, lassen sich relativ farbneutrale graue oder braune Gläser herstellen. Eines der Hauptprobleme derartiger Gläser ist jedoch die schnelle Alterung, die sich einerseits in nachlassender Eindunkelung, andererseits in einer Vergilbung bemerkbar macht.

Selbst in langen Versuchsreihen ermittelte Mischungen aus Antioxidantien, UV-Absorbern und gehinderten Aminen als Lichtstabilisatoren können das vorgenannte Problem hinsichtlich einer schnellen Alterung nur unzureichend abmildern. Dies zeigt sich auch in der erst jüngst veröffentlichten US 5,770,115, in der eine Zusammensetzung, umfassend (a) 5 bis 50 Gew.-% mindestens eines Polyphenol-Antioxidationsmittels, (b) 5 bis 50 Gew.-% eines organischen UV-Absorbers und (c) 10 bis 90 Gew.-% mindestens eines gehinderten Amin-Lichtstabilisators, bezogen auf die Gesamtstabilisatormenge, beschrieben ist, wobei das Gewichtsverhältnis von Naphthopyran zu Stabilisator 2,5:1 bis 1,5:1 beträgt. Auch die besten dieser Mischungen weisen noch mindestens eine Verdoppelung des ursprünglichen b*-Wertes im a*-b*-Farbraum des CIELAB-Farbsystems und einen mindestens 20%igen Leistungsverlust im Verlauf des Alterungstests auf.

Darüberhinaus tritt bei einem Erwärmen hinsichtlich nahezu aller verwendeten Additive Migration auf, was bei der Entspiegelung von Brillengläsern zu Defekten, wie Schichtablösung, führen kann. Dies ist vor allem bei einer photochromen Oberflächenfärbung häufig der Fall.

Weitere Nachteile der im Stand der Technik verfügbaren Zusammensetzungen liegen darin, daß bei den Kunststoffgegenständen in Form von Gläsern durchweg kein neutraler Farbeindruck beobachtet wird, da die spektrale Absorption im Bereich 400 bis 650 nm keinen konstanten Wert zeigt. Darüberhinaus werden für entsprechende Anwendungszwecke in der Regel auch an die langwellige Absorption besondere Anforderungen gestellt. Bekannte Gläser zeigen bei extremer Eindunkelung aufgrund intensiver UV-Bestrahlung, z.B. beim (Gletscher-)Skifahren, die unangenehme Eigenschaft der Farbverfälschung. Dies rührt daher, daß das Auge bei dieser Eindunkelung sehr viel mehr Information aus dem Wellenlängenbereich von oberhalb 650 nm als aus dem Bereich unterhalb von 650 nm empfängt; beispielsweise erscheint Schnee deshalb rotstichig.

Der vorliegenden Erfindung liegt somit die Aufgabe zugrunde, einen photochromen transparenten Kunststoffgegenstand bereitzustellen, der eine Kombination photochromer Farbstoffe enthalten soll, ohne die vorgenannten Nachteile, wie geringe Alterungsbeständigkeit, Eigenfarbe und unzufriedenstellende Aufhellungsgeschwindigkeit/ zu zeigen. Darüberhinaus sollte auf den Einsatz von Stabilisatoren weitgehend verzichtet werden, um die vorstehend beschriebenen Nachteile des Standes der Technik zu vermeiden. Die Kunststoffgegenstände sollten ferner einen möglichst neutralen Farbeindruck zeigen, insbesondere bei grauen Gläsern, d.h., die spektrale Absorption im Bereich 400 bis 650 nm sollte nahezu einen konstanten Wert annehmen. Des weiteren sollte der als ophthalmische Linse ausgebildete transparente, photochrome Kunststoffgegenstand im voll aufgehellten, nicht entspiegelten Zustand eine Transmission von mindestens etwa 80% zeigen.

Diese Aufgabe wird durch die in den Ansprüchen gekennzeichneten Ausführungsformen gelöst. Insbesondere wird ein photochromer Kunststoffgegenstand bereitgestellt, der ein Kunststoffmaterial und darin eingebracht mindestens zwei photochrome Pyran-Derivate umfaßt, die jeweils einen an dem zum Pyran-Sauerstoffatom benachbarten Kohlenstoffatom gebundenen Arylrest aufweisen, der mit mindestens einer, mindestens ein Stickstoffatom enthaltenden Gruppe substituiert ist, wobei das längstwellige Absorptionsmaximum der lichtangeregten Form des einen Pyran-Derivats oberhalb von 550 nm und das längstwellige Absorptionsmaximum der lichtangeregten Form des anderen Pyran-Derivats unterhalb von 550 nm liegt und das kürzerwellig absorbierende Pyran-Derivat aus 3[H]-Naphtho[2,1-b]pyranen und das längerwellig absorbierende Pyran-Derivat aus Indeno[2,1-f]naphtho[1,2-b]pyranen oder Spiro-9-fluoreno[1,2-b]pyranen ausgewählt sind.

Vorzugsweise unterscheiden sich die längstwelligen Absorptionsmaxima der erfindungsgemäß verwendeten Pyran-Derivate um mehr als 50 nm, aber weniger als 150 nm voneinander.

Die mindestens ein Stickstoffatom enthaltende Gruppe, die an den Arylrest gebunden ist, der kovalent an den zum Pyran-Sauerstoffatom benachbarten Kohlenstoffatom der jeweiligen Pyran-Derivate geknüpft ist, ist vorzugsweise eine Aminogruppe oder ein mindestens ein Stickstoffatom enthaltender Heterozyklus (Stickstoffheterozyklus).

Die Aminogruppe kann un-, mono- oder disubstituiert sein, wobei die Substituenten ausgewählt sein können aus der Gruppe, bestehend aus Hydroxy, (C₁-C₆)-Alkyl, (C₁-C₆)-Alkoxy, (C₁-C₆)-Alkoxy-(C₁-C₆)-alkyl, Phenyl und Phenyl-(C₁-C₆)-alkyl, wobei die Substituenten gleich oder verschieden sein können. Der Stickstoffheterozyklus kann aromatisch oder nicht aromatisch sein.

Beispiele solcher Stickstoffheterozyklen schließen Pyrrol, Pyrazol, Imidazol, Imidazolidin, Pyridin, Pyrimidin, Pyrazin, Indol, Indazol, Chinolin, Isochinolin, Purin, Phenanthridin, Acridin, Phenazin, Carbazol, Thiazol, Oxazol, Morpholin, Thiomorpholin, Pyrrolidin, Pyrazolidin, Piperidin und Piperazin ein. Vorzugsweise ist der Heterozyklus Thiomorpholin, Morpholin, Pyrrolidin, Piperidin, Pyrazolidin, Imidazolidin und Piperidin.

Selbstverständlich kann dieser Heterozyklus sowohl un-, mono- als auch disubstituiert sein, wobei die Substituenten wiederum ausgewählt sein können aus der Gruppe, bestehend aus Hydroxy, (C₁-C₆)-Alkyl, (C₁-C₆)-Alkoxy, (C₁-C₆)-Alkoxy-(C₁-C₆)-alkyl, Phenyl, Phenyl-(C₁-C₆)-alkyl und Halogen. Bei Anwesenheit von zwei Substituenten können diese selbstverständlich gleich oder verschieden sein.

Vorzugsweise ist die Aminogruppe bzw. der Stickstoffheterozyklus in der para-Stellung über den Stickstoff an den Arylrest der erfindungsgemäß verwendeten photochromen Pyran-Derivate gebunden.

In einer weiteren Ausführungsform der vorliegenden Erfindung ist an das zum Pyran-Sauerstoffatom benachbarte Kohlenstoffatom der erfindungsgemäß verwendeten Pyran-Derivate ein weiterer aromatischer Rest gebunden, ausgewählt aus der Gruppe, bestehend aus einem substituierten oder unsubstituierten Arylrest und einem substituierten oder unsubstituierten Heteroarylrest. Der Heteroarylrest kann dabei beispielsweise ein Furyl- oder Thienylrest sein und der Arylrest kann beispielsweise ein Phenyl-, Naphthyl- oder Phenantrylrest sein. Die Substituenten dieser Aryl- bzw. Heteroarylreste können solche sein, wie vorgenannt für den ersten, kovalent an den zum Pyran-Sauerstoffatom benachbarten Kohlenstoffatom der jeweiligen Pyran-Derivate gebundenen Arylrest angeführt. Der Arylrest kann insofern beispielsweise auch ein wie vorstehend definierter Arylrest sein, der mit mindestens einer, mindestens ein Stickstoffatom enthaltenden Gruppe substituiert ist.

Die spezifische Kombination der erfindungsgemäß verwendeten Pyran-Derivate führt zu einem Kunststoffgegenstand, dessen spektrale Absorption im Bereich von 400 bis 650 nm einen nahezu konstanten Wert aufweist, d.h. einem Kunststoffgegenstand, der im eingedunkelten Zustand im Bereich von 400 bis 650 nm eine spektrale Absorption durchgehend von nicht unter 80% aufweist. Eine aus dem erfindungsgemäßen Kunststoffgegenstand gebildete, nicht entspiegelte, ophthalmische Linse zeigt infolge der spezifischen Kombination der erfindungsgemäß verwendeten Pyran-Derivate eine spektrale Transmission im voll eingedunkelten Zustand bei 23°C, gemessen nach prEN ISO 8980, von <20%. Die Transmission einer voll aufgehellten, nicht entspiegelten, ophthalmischen Linse aus dem erfindungsgemäßen Kunststoffgegenstand beträgt 80% oder mehr.

Durch die spezifische Kombination der erfindungsgemäß verwendeten, mit einer Aminogruppe bzw. mit einem Stickstoffheterozyklus substituierten Pyran-Derivate können Kunststoffgegenstände bereitgestellt werden, die eine Absorption im eingedunkelten Zustand bei 700 nm von über 50%, bevorzugt über 55% und besonders bevorzugt über 60%, gemessen bei 23°C, zeigen.

Durch die spezifische Kombination der erfindungsgemäß verwendeten, mit einer Aminogruppe bzw. mit einem Stickstoffheterozyklus substituierten Pyran-Derivate können ferner Kunststoffgegenstände bereitgestellt werden, die sich dadurch auszeichnen, daß die Differenz der Absorption nach V_{λ} gemäß prEN ISO 8980, gemessen bei 23°C und 40°C, nicht größer als 25%, bevorzugt nicht größer als 20% und besonders bevorzugt nicht größer als 15% ist.

Überraschenderweise kann durch die spezifische Kombination der erfindungsgemäßen Pyran-Derivate ein Kunststoffgegenstand bereitgestellt werden, dessen Absorptionskurve im voll eingedunkelten Zustand bei 23°C, gemessen nach prEN ISO 8980, sich dadurch auszeichnet, daß der maximale Absorptionsunterschied in dem Bereich, in dem die spektrale Hellempfindlichkeit des menschlichen Auges für das Tagsehen (2°-Beobachter) mindestens 10% des Maximalwerts beträgt, geringer als 15%, besonders bevorzugt geringer als 10% ist.

Wie vorstehend ausgeführt ist das erfindungsgemäß verwendete, kürzerwellig absorbierende Pyran-Derivat ein 3[H]-Naphtho[2,1-b]pyran. Beispielsweise können in den erfindungsgemäßen Kunststoffgegenständen die in DE 198 20 781 beschriebenen aminosubstituierten bzw. mit einem Stickstoffheterozyklus substituierten 3[H]-Naphtho[2,1-b]pyrane verwendet werden. Als bevorzugte Beispiele der erfindungsgemäß verwendeten 3[H]-Naphtho[2,1-b]pyrane können 3-(4-Diphenylaminophenyl)-3-(2-fluorphenyl)-3H-naphtho[2,1-b]pyran, 3-(4-Dimethylaminophenyl)-3-(2-fluorphenyl)-3H-naphtho[2,1-b]pyran, 3-(2-Fluorphenyl)-3-[4-(N-morpholinyl)phenyl]-3H-naphtho[2,1-b]pyran, 3-(2-Fluorphenyl)-3-[4-(N-piperidinyl)phenyl]-3H-naphtho[2,1-b]pyran, 3-(4-Dimethylaminophenyl)-6-(N-morpholinyl)-3-phenyl-3H-naphtho[2,1-b]pyran, 6-(N-Morpholinyl)-3-[4-(N-morpholinyl)phenyl]-3-phenyl-3H-naphtho[2,1-b]pyran, 6-(N-Morpholinyl)-3-phenyl-3-[4-(N-piperidinyl)phenyl]-3H-naphtho[2,1-b]pyran und 6-(N-Morpholinyl)-3-phenyl-3-[4-(N-pyrrolidinyl)phenyl]-3H-naphtho[2,1-b]pyran angeführt werden.

Das erfindungsgemäß verwendete, längerwellig absorbierende Pyran-Derivat ist ein Indeno[2,1-f]naphtho[1,2-b]pyranderivat oder ein Spiro-9-fluoreno[1,2-b]pyranderivat, wobei selbstverständlich auch ein Gemisch davon eingesetzt werden kann. Diese längerwellig absorbierenden Pyran-Derivate können dabei auch benzoannelliert sein. Beispielsweise können in den erfindungsgemäßen Kunststoffgegenständen die in WO 99/15518 beschriebenen aminosubstituierten bzw. mit einem Stickstoffheterozyklus substituierten Indeno[2,1-f]naphtho-[1,2-b]pyrane bzw. die in DE 199 02 771 beschriebenen aminosubstituierten bzw. mit einem Stickstoffheterozyklus substituierten Spiro-9-fluoreno[1,2-b]pyrane verwendet werden. Als bevorzugte Beispiele hierfür können 3,13-Diphenyl-3-(4-diphenylaminophenyl)-13-hydroxy-6-methoxy-indeno[2,1-f]-naphtho[1,2-b]pyran, 13-(2,5-Dimethylphenyl)-3-(4-diphenylaminophenyl)-13-hydroxy-6-methoxy-3-phenyl-indeno[2,1-f]-naphtho[1,2-b]pyran, 13-(2,5-Dimethylphenyl)-3-(4-diphenylaminophenyl)-13-hydroxy-3-phenyl-indeno[2,1-f]-naphtho[1,2-b]pyran, Spiro-9-fluoreno-13'-[3-(4-dimethylaminophenyl)-6-methoxy-3-phenyl-indeno[2,1-f]naphtho[1,2-b]pyran], Spiro-9-fluoreno-13'-[3-(4-dimethylaminophenyl)-3-phenyl-indeno[2,1-f]naphtho[1,2-b]pyran], Spiro-9-fluoreno-13'-[3-(4-diphenylaminophenyl)-6-methoxy-3-phenyl-indeno[2,1-f]naphtho[1,2-b]pyran], Spiro-9-fluoreno-13'-[3-(4-diphenylaminophenyl)-3-phenyl-indeno[2,1-f]naphtho[1,2-b]pyran], Spiro-9-fluoreno-13'-{3-[4-(N-morpholinyl)phenyl]-6-methoxy-3-phenyl-indeno[2,1-f]naphtho[1,2-b]pyran}, Spiro-9-fluoreno-13'-{3-[4-(N-morpholinyl)phenyl]-3-phenyl-indeno[2,1-f]naphtho[1,2-b]pyran}, Spiro-9-fluoreno-13'-{6-methoxy-3-phenyl-3-[4-(N-piperidinyl)phenyl]-indeno[2,1-f]naphtho[1,2-b]pyran} und Spiro-9-fluoreno-13'-{3-phenyl-3-[4-(N-piperidinyl)phenyl]-indeno[2,1-f]naphtho[1,2-b]pyran} angeführt werden.

Es versteht sich von selbst, daß fakultativ weitere photochrome Farbstoffe, insbesondere weitere Pyran-Derivate, wie z.B. Naphthopyrane, neben den zwingend erforderlichen beiden Pyran-Derivaten im erfindungsgemäßen Kunststoffgegenstand enthalten sein können. Hierdurch kann eine möglichst optimale Farbneutralität erreicht werden. Auch ist es möglich, Spezialeffekte gezielt einzustellen. Für die Eigenschaften der photochromen Leistung, wie die Eindunkelung, die Temperaturabhängigkeit der Eindunkelung, das Absorptionsverhalten jenseits von 650 nm und das Alterungsverhalten sind derartige zusätzliche Farbstoffe jedoch nicht notwendig. Ihr Einfluß auf die genannten Eigenschaften ist insgesamt eher gering.

Als Träger bzw. Matrix für die mindestens zwei photochromen Farbstoffen in Form der vorstehend beschriebenen Pyran-Derivate enthält der Kunststoffgegenstand ein oder mehrere Kunststoffmaterialien. Die verwendeten Kunststoffmaterialien können die im Stand der Technik üblicherweise, insbesondere für ophthalmische Zwecke verwendbaren Kunststoffe sein. Beispielsweise kann das Kunststoffmaterial aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methylstyrol, Polyvinylbutyrat, Copoly(styrolmethylmethacrylat), Copoly(styrolacrylnitril) und Polymeren aus Bestandteilen der Gruppe, bestehend aus Polyol(allylcarbonat)-monomeren, polyfunktionalen Acrylat-, Methacrylat- oder Diethylenglykoldimethacrylatmonomeren, ethoxylierten Bisphenol-A-dimethacrylatmonomeren, Diisopropenylbenzolmonomeren, Ethylenglykolbismethacrylatmonomeren, Poly(ethylenglykol)bismethacrylatmonomeren, ethoxylierten Phenolmethacrylatmonomeren, alkoxylierten Polyalkoholacrylaten und Diallylidenpentaerythritmonomeren oder Gemischen davon, ausgewählt sein.

Die erfindungsgemäßen photochromen Kunststoffgegenstände zeichnen sich durch eine große Lebensdauer, gute Aufhellungsgeschwindigkeiten, fehlendes Auftreten von Vergilbung sowie einen neutralen Farbeindruck aus, wobei auf den Einsatz von Stabilisatoren und dergleichen in den erfindungsgemäßen Kunststoffgegenständen ganz oder weitgehend verzichtet werden kann. Die Kunststoffgegenstände erfüllen darüberhinaus in besonders vorteilhafter Weise die Anforderung, insbesondere im Falle grauer Gläser, einen möglichst neutralen Farbeindruck zu zeigen. Ein solcher neutraler Farbeindruck wird durch eine nahezu gleichmäßige Absorption im Bereich von 400 bis 650 nm hervorgerufen.

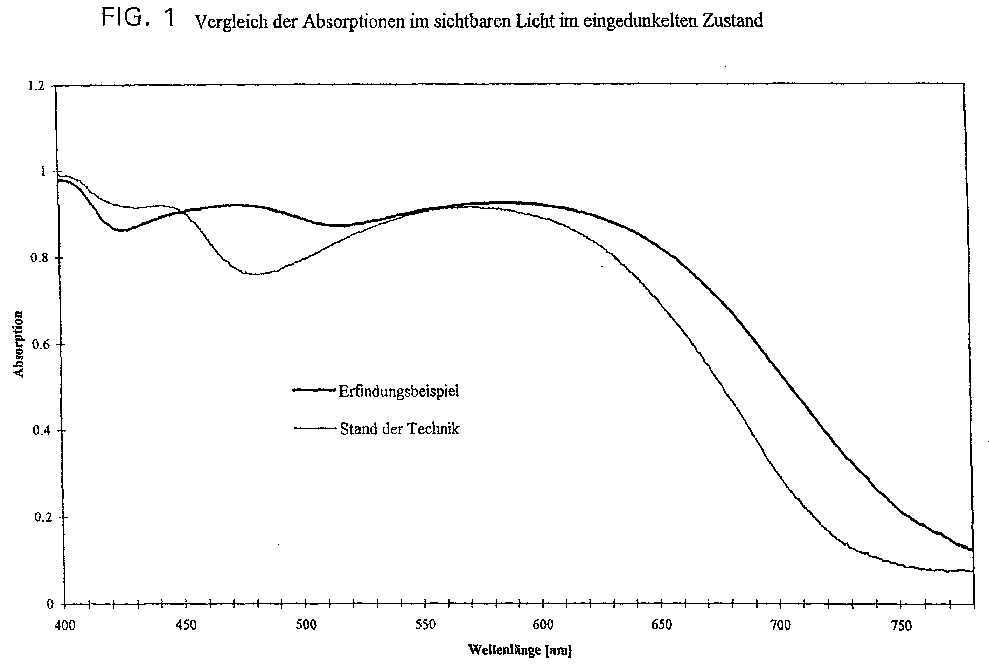

Figur 1 zeigt anhand eines typischen Ausführungsbeispiels die spektrale Absorption eines erfindungsgemäßen Kunststoffgegenstands mit der spezifischen Kombination zweier erfindungsgemäß verwendbarer photochromer Pyran-Derivate im eingedunkelten Zustand gegenüber der Absorption eines typischerweise im Stand der Technik verfügbaren Gegenstands, wie z.B. in US 5,753,146 beschrieben, der nicht die spezifische Kombination der im Rahmen der vorliegenden Erfindung verwendeten Pyran-Derivate, sondern zwei Naphthopyranverbindungen enthält, die keine aminosubstituierten Arylgruppen aufweisen. Wie der Figur 1 entnommen werden kann, weist die Absorptionskurve eines typischerweise im Stand der Technik verfügbaren Gegenstands, wie z.B. in US 5,753,146 beschrieben, in nachteiliger Weise im Bereich von 460 bis 500 nm eine deutliche Absenkung ("Delle"), die deutlich unter 80% absinkt, und eine Absorption bei 700 nm von lediglich 30% auf. Im Gegensatz dazu weist die Absorptionskurve des erfindungsgemäßen Ausführungsbeispiels im Bereich von 400 bis 650 nm einen nahezu konstanten Wert von durchgehend über 80% und eine Absorption bei 700 nm von über 50% auf, wodurch zum einen ein neutraler Farbeindruck erreicht wird und zum anderen das Auftreten von Farbverfälschungen verhindert wird.

Der erfindungsgemäße photochrome Kunststoffgegenstand bietet vielseitige Verwendungsmöglichkeiten. Beispielsweise kann der erfindungsgemäße photochrome Kunststoffgegenstand als sogenanntes Allroundglas eingesetzt werden. Vorzugsweise findet der erfindungsgemäße photochrome Kunststoffgegenstand als optisches Element, beispielsweise als Linse für Brillengläser, Verwendung. Bisher bekannte Kunststofflinsen besitzen einen Brechungsindex, gemessen mit der Na-d-Linie, im Bereich von 1,49 bis 1,76. Durch die erfindungsgemäßen photochromen Kunststoffgegenstände sind vorzugsweise Linsen mit einem Brechungsindex im Bereich von 1,50 bis 1,60, gemessen mit der Na-d-Linie, erhältlich.

## Patentansprüche

1. Photochromer Kunststoffgegenstand, umfassend ein Kunststoffmaterial und darin eingebracht mindestens zwei photochrome Pyran-Derivate, die jeweils einen an dem zum Pyran-Sauerstoffatom benachbarten Kohlenstoffatom gebundenen Arylrest aufweisen, der mit mindestens einer, mindestens ein Stickstoffatom enthaltenden Gruppe substituiert ist, wobei das längstwellige Absorptionsmaximum der lichtangeregten Form des einen Pyran-Derivats oberhalb von 550 nm und das längstwellige Absorptionsmaximum der lichtangeregten Form des anderen Pyran-Derivats unterhalb von 550 nm liegt und das kürzerwellig absorbierende Pyran-Derivat aus 3[H]-Naphtho[2,1-b]pyranen und das längerwellig absorbierende Pyran-Derivat aus Indeno[2,1-f]naphtho[1,2-b]pyranen oder Spiro-9-fluoreno[1,2-b]pyranen ausgewählt sind.

2. Photochromer Kunststoffgegenstand nach Anspruch 1, wobei sich die längstwelligen Absorptionsmaxima der Pyran-Derivate um mehr als 50 nm, aber weniger als 150 nm voneinander unterscheiden.

3. Photochromer Kunststoffgegenstand nach Anspruch 1 oder 2, wobei die mindestens ein Stickstoffatom enthaltende Gruppe eine un-, mono- oder disubstituierte Aminogruppe oder ein mindestens ein Stickstoffatom enthaltender Heterozyklus ist.

4. Photochromer Kunststoffgegenstand nach Anspruch 3, wobei der Heterozyklus aus Pyrrol, Pyrazol, Imidazol, Imidazolidin, Pyridin, Pyrimidin, Pyrazin, Indol, Indazol, Chinolin, Isochinolin, Purin, Phenanthridin, Acridin, Phenazin, Carbazol, Thiazol, Oxazol, Morpholin, Thiomorpholin, Pyrrolidin, Pyrazolidin, Piperidin oder Piperazin ausgewählt ist.

5. Photochromer Kunststoffgegenstand nach einem oder mehreren der Ansprüche 1 bis 4, wobei die mindestens ein Stickstoffatom enthaltende Gruppe in der para-Stellung über den Stickstoff an dem zum Pyran-Sauerstoffatom benachbarten Kohlenstoffatom gebundenen Arylrest der photochromen Pyran-Derivate gebunden ist.

6. Photochromer Kunststoffgegenstand nach einem oder mehreren der Ansprüche 1 bis 5, wobei an das zum Pyran-Sauerstoffatom benachbarte Kohlenstoffatom der Pyran-Derivate ein weiterer aromatischer Rest gebunden ist, ausgewählt aus der Gruppe, bestehend aus einem substituierten oder unsubstituierten Arylrest und einem substituierten oder unsubstituierten Heteroarylrest.

7. Photochromer Kunststoffgegenstand nach einem oder mehreren der Ansprüche 1 bis 6, wobei das Kunststoffmaterial aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methylstyrol, Polyvinylbutyrat, Copoly(styrolmethylmethacrylat), Copoly(styrolacrylnitril) und Polymeren aus Bestandteilen der Gruppe, bestehend aus Polyol(allylcarbonat)monomeren, polyfunktionalen Acrylat-, Methacrylat-oder Diethylenglykoldimethacrylatmonomeren, ethoxylierten Bisphenol-A-dimethacrylatmonomeren, Diisopropenylbenzolmonomeren, Ethylenglykolbismethacrylatmonomeren, Poly(ethylenglykol)bismethacrylat-monomeren, ethoxylierten Phenolmethacrylatmonomeren, alkoxylierten Polyalkoholacrylaten und Diallylidenpentaerythritmonomeren oder Gemischen davon, ausgewählt ist.

8. Photochromer Kunststoffgegenstand nach einem oder mehreren der Ansprüche 1 bis 7, der im eingedunkelten Zustand im Bereich von 400 bis 650 nm eine spektrale Absorption durchgehend von nicht unter 80% aufweist.

9. Photochromer Kunststoffgegenstand nach einem oder mehreren der Ansprüche 1 bis 8, der, ausgebildet als ophthalmische Linse, im nicht entspiegelten Zustand eine spektrale Transmission im voll eingedunkelten Zustand bei 23°C, gemessen nach prEN ISO 8980, von <20% zeigt.

10. Photochromer Kunststoffgegenstand nach einem oder mehreren der Ansprüche 1 bis 9, der, ausgebildet als ophthalmische Linse, im voll aufgehellten, nicht entspiegelten Zustand eine spektrale Transmission von 80% oder mehr aufweist.

11. Photochromer Kunststoffgegenstand nach einem oder mehreren der Ansprüche 1 bis 10, der eine Absorption im eingedunkelten Zustand bei 700 nm von über 50%, gemessen bei 23°C, zeigt.

12. Photochromer Kunststoffgegenstand nach einem oder mehreren der Ansprüche 1 bis 11, der **dadurch gekennzeichnet ist, daß** die Differenz der Absorption nach V_{λ}gemäß prEN ISO 8980, gemessen bei 23°C und 40°C, nicht größer als 25% ist.

13. Verwendung des photochromen Kunststoffgegenstands nach einem oder mehreren der Ansprüche 1 bis 12 als optisches Element.

14. Verwendung nach Anspruch 13, wobei das optische Element eine Linse ist.

15. Verwendung nach Anspruch 14, wobei die Linse einen Brechungsindex, gemessen mit der Na-d-Linie, im Bereich von 1,50 bis 1,60 aufweist.

## Claims

1. Photochromic plastic object comprising a plastics material and at least two photochromic pyran derivatives introduced into same, which each have an aryl group linked to the carbon atom adjacent to the pyran oxygen atom, said aryl group being substituted with at least one group containing at least one nitrogen atom, the longest wavelength absorption maximum of the light-stimulated form of the one pyran derivative being above 550 nm and the longest wave absorption maximum of the light-stimulated form of the other pyran derivative being below 550 nm, and the pyran derivative absorbing in the shorter wavelength being selected from 3[H]-naphtho[2,1-b]pyrans and the pyran derivative absorbing in the longer wavelength being selected from indeno[2,1-f]naphtho[1,2-b]pyrans of spiro-9-fluoreno[1,2-b]pyrans.

2. Photochromic plastic object according to claim 1 wherein the longest wave absorption maxima of the pyran derivatives differ from each other by more than 50 nm but less than 150 nm.

3. Photochromic plastic object according to claim 1 or 2, wherein the group containing at least one nitrogen atom is an unsubstituted, monosubstituted or disubstituted amino group or a heterocyclic group containing at least one nitrogen atom.

4. Photochromic plastic object according to claim 3, wherein the heterocyclic group is selected from pyrrole, pyrazole, imidazole, imidazolidine, pyridine, pyrimidine, pyrazine, indole, indazole, quinoline, isoquinoline, purine, phenanthridine, acridine, phenazine, carbazole, thiazole, oxazole, morpholine, thiomorpholine, pyrrolidine, pyrazolidine, piperidine or piperazine.

5. Photochromic plastic object according to one or more of claims 1 to 4, wherein the group containing at least one nitrogen atom is linked in the para-position via the nitrogen to the aryl group of the photochromic pyran derivatives, said aryl group being linked to the carbon atom adjacent to the pyran oxygen atom.

6. Photochromic plastic object according to one or more of claims 1 to 5, wherein there is linked to the carbon atom of the pyran derivatives which is adjacent to the pyran oxygen atom a further aromatic group selected from the group comprising a substituted or unsubstituted aryl group and a substituted or unsubstituted heteroaryl group.

7. Photochromic plastic object according to one or more of claims 1 to 6, wherein the plastics material is selected from poly(C₁-C₁₂ alkyl) methacrylates, polyoxyalkylene methacrylates, polyalkoxyphenol methacrylates, cellulose acetate, cellulose triacetate, cellulose acetate propionate, cellulose acetate butyrate, polyvinyl acetate, polyvinyl alcohol, polyvinyl chloride, polyvinylidene chloride, polycarbonates, polyesters, polyurethanes, polyethylene terephthalate, polystyrene, poly-a-methyl styrene, polyvinyl butyrate, copoly(styrene methyl methacrylate), copoly(styrene acrylonitrile) and polymers of components of the group comprising polyol(allyl carbonate) monomers, polyfunctional acrylate, methacrylate or diethylene glycol dimethacrylate monomers, ethoxylated bisphenol A dimethacrylate monomers, diisopropenyl benzene monomers, ethylene glycol bismethacrylate monomers, poly(ethylene glycol) bismethacrylate monomers, ethoxylated phenol methacrylate monomers, alkoxylated polyalcohol acrylates and diallylidene pentaerythritol monomers and mixtures thereof.

8. Photochromic plastic object according to one or more of claims 1 to 7, which in the darkened state has a consistent spectral absorption of not less than 80% in the range from 400 to 650 nm.

9. Photochromic plastic object according to one or more of claims 1 to 8, which, configured as an ophthalmic lens, when uncoated and in a fully darkened state shows a spectral transmission of < 20% at 23°C when measured according to prEN ISO 8980.

10. Photochromic plastic object according to one or more of claims 1 to 9, which, configured as an ophthalmic lens, when uncoated and in a fully decolourised state has a spectral transmission of 80% or more.

11. Photochromic plastic object according to one or more of claims 1 to 10 which shows an absorption in a darkened state of more than 50% at 700 nm, measured at 23°C.

12. Photochromic plastic object according to one or more of claims 1 to 11, which is **characterised in that** the difference in the V₁ absorption according to prEN ISO 8980, measured at 23°C and 40°C, is not greater than 25%.

13. Use of the photochromic plastic object according to one or more of claims 1 to 12 as an optical element.

14. Use according to claim 13 wherein the optical element is a lens.

15. Use according to claim 14 wherein the lens has a refractive index, measured with the sodium D line, in the range from 1.50 to 1.60.

## Revendications

1. Objet en plastique photochromique, qui comprend un matériau plastique et incorporés dans celui-ci, au moins deux dérivés pyranne photochromiques, lesquels présentent chaque fois, un reste aryle lié à l'atome de carbone voisin de l'atome d'oxygène pyrannique, qui est substitué par au moins un radical contenant au moins un atome d'azote, où le maximum d'absorption de la plus grande longueur d'onde de la forme activée par la lumière d'un dérivé pyranne est supérieure à 550 nm et le maximum d'absorption de la plus grande longueur d'onde de la forme activée par la lumière de l'autre dérivé pyranne est inférieure à 550 nm et le dérivé pyranne absorbant à faible longueur d'onde est choisi parmi les 3[H]-naphto[2,1-b]pyrannes et le dérivé pyranne absorbant à grande longueur d'onde est choisi parmi les indéno[2,1-f]naphto[1,2-b]pyrannes ou les spiro-9-fluoréno[1,2-b]pyrannes.

2. Objet en plastique photochromique selon la revendication 1, où les maxima d'absorption de plus grande longueur d'onde des dérivés pyranne se différencient l'un de l'autre par plus de 50 nm, mais par moins de 150 nm.

3. Objet en plastique photochromique selon la revendication 1 ou 2, où le radical contenant au moins un atome d'azote est un radical amino non, mono- ou disubstitué ou un hétérocycle contenant au moins un atome d'azote.

4. Objet en plastique photochromique selon la revendication 3, où l'hétérocycle est choisi parmi le pyrrole, le pyrazole, l'imidazole, l'imidazolidine, la pyridine, la pyrimidine, la pyrazine, l'indole, l'indazole, la quinoléine, l'isoquinoléine, la purine, la phénanthridine, l'acridine, la phénazine, le carbazole, le thiazole, l'oxazole, la morpholine, la thiomorpholine, la pyrrolidine, la pyrazolidine, la pipéridine et la pipérazine.

5. Objet en plastique photochromique selon l'une ou plusieurs des revendications 1 à 4, où le radical contenant au moins un atome d'azote est relié en position para par l'azote au reste aryle lié à l'atome de carbone voisin de l'atome d'oxygène pyrannique des dérivés pyranne photochromiques.

6. Objet en plastique photochromique selon l'une ou plusieurs des revendications 1 à 5, où sur l'atome de carbone voisin de l'atome d'oxygène pyrannique des dérivés pyranne, est relié un autre reste aromatique, choisi parmi le groupe consistant en un reste aryle non substitué ou substitué et un reste hétéroaryle non substitué ou substitué.

7. Objet en plastique photochromique selon l'une ou plusieurs des revendications 1 à 6, où la matière plastique est choisie parmi les poly(méthacrylates d'alkyle en C₁-C₁₂), poly(méthacrylates d'oxyalcoylène), poly(méthacrylates d'alcoxyphénol), acétate de cellulose, triacétate de cellulose, acétopropionate de cellulose, acétobutyrate de cellulose, poly(acétate de vinyle), poly(alcool vinylique), poly(chlorure de vinyle), poly(chlorure de vinylidène), polycarbonates, polyesters, polyuréthannes, poly(téréphtalate d'éthylène), polystyrène, poly-α-méthylstyrène, poly(butyrate de vinyle), copoly(styrène-méthacrylate de méthyle), copoly(styrène-acrylonitrile) et des polymères composés des constituants du groupe consistant en les monomères polyol(carbonate d'allyle), les monomères polyfonctionnels acrylate, méthacrylate ou diméthacrylate de diéthylèneglycol, les monomères bisphénol A-diméthacrylate éthoxylés, les monomères diisopropénylbenzène, les monomères bisméthacrylate d'éthylèneglycol, les monomères bisméthacrylate de poly(éthylèneglycol), les monomères méthacrylate de phénol éthoxylés, les monomères poly(acrylate d'alcool) et diallylidènepentaérythritol alcoxylés ou leurs mélanges.

8. Objet en plastique photochromique selon l'une ou plusieurs des revendications 1 à 7, qui à l'état obscurci, présente dans le domaine allant de 400 à 650 nm, une absorption spectrale constante, non inférieure à 80%.

9. Objet en plastique photochromique selon l'une ou plusieurs des revendications 1 à 8, qui, formé comme une lentille ophtalmique, présente à l'état non antireflet, une transmission spectrale à l'état complètement obscurci à 23°C, mesurée d'après prEN ISO 8980, < 20%.

10. Objet en plastique photochromique selon l'une ou plusieurs des revendications 1 à 9, qui, formé comme une lentille ophtalmique, présente à l'état complètement éclairci, non antireflet, une transmission spectrale de 80% ou plus.

11. Objet en plastique photochromique selon l'une ou plusieurs des revendications 1 à 10, qui montre une absorption à l'état obscurci à 700 nm, de plus de 50%, mesurée à 23°C.

12. Objet en plastique photochromique selon l'une ou plusieurs des revendications 1 à 11, qui est **caractérisé en ce que** la différence d'absorption d'après V_{λ} suivant prEN ISO 8980, mesurées à 23°C et 40°C, est non supérieure à 25%.

13. Utilisation de l'objet en plastique photochromique selon l'une ou plusieurs des revendications 1 à 12, comme élément optique.

14. Utilisation selon la revendication 13, où l'élément optique est une lentille.

15. Utilisation selon la revendication 14, où la lentille présente un indice de réfraction, mesuré sur la bande Nad, dans la gamme allant de 1,50 à 1,60.
